# EUROPEAN PATENT APPLICATION

(11) **EP 4 722 637 A1**
(43) Date of publication of application: **08.04.2026**
(21) Application number: 24204302.4
(22) Date of filing: 02.10.2024
(51) Int. Cl.: G01B 5/008, G01B 21/04

(54) **METHOD OF OPERATING A MEASUREMENT SYSTEM**

(71) Applicant: Hexagon Manufacturing Intelligence Sàrl, 1020 Renens (CH)
(72) Inventor: Fall, Stefan, 35578 Wetzlar (DE); Manetti, Davide, 1009 Pully (CH); Hudanski, Eric, 2000 Neuchâtel (CH); Meyer, Eric, 1169 Yens (CH); De Graffenried, Christian, 1616 Attalens (CH)
(74) Representative: P&TS SA (AG, Ltd.)

(57) **Abstract**

Method of operating a measurement system comprising a coordinate measuring machine (200), a configurable tool rack (100) that can accept a plurality of stations (105,106), each station capable of holding a tool (95). In the method, the system measures a workpiece according to a measuring plan that includes tool change operations and measures of the workpiece with different tools available in the rack. The tool change operations are changed automatically based on a set of operational parameters acquired by electronic devices and sensor installed on the tool rack or on the tool stations or on the tools in the rack, or any combination thereof.

## Description

### Technical domain

The present invention concerns methods of configuring and operating coordinate measuring machines, as well as arrangements of coordinate measuring machines and measuring tools.

### Related art

Coordinate measuring machines are known and used in the state of the art in a multitude of applications and variant of forms. In general, they have a moveable positioning platform that can accept many different interchangeable tools and accessories. In metrology, the tools may be coordinate probes, contact probes (e. g. touch trigger probes, scanning probes or analogue probes) of different reaches and with various extensions, non-contact probes such as optical probes, vision system for the optical inspection of workpieces, surface status and roughness probes, and many others. These machines often have a rack holding a selection of tools and may be programmed to load and unload several tools automatically one after the other, following a measurement program for a special workpiece. Besides coordinates measuring machines, industrial robots can be configured to use such racks to change the tool at their business. Similarly, metalworking machines may load measuring tools and/or cutting tools from a rack of this kind.

The positioning platform on which the tools are mounted may be capable of orienting the tool arbitrarily and automatically. This is usual in the field of dimensional metrology, where the tools are often mounted on an articulated head that is actuated automatically, such that the tools can be oriented according to the needs of the measurement task at hand.

It is desirable that the tools be loaded and unloaded from and to the rack in a dimensionally precise, gentle and repeatable manner, avoiding shocks and limiting contact forces as much as possible, to preserve precision.

Patent application EP 4414656 A1 discloses a tool rack for a CMM with a plurality of tool ports on a rail that can determine the position of each port along the rail and communicate it to a machine controller.

Patent EP 3872447 B1 discloses a coordinate measuring machine that can determine automatically the position of a tool rack in the measuring space and adapt the tool exchange procedure accordingly.

US 8535208 discloses a rack with several receptacles for holding a set of measurement probes for a coordinate measuring machine and several devices for reducing coupling and uncoupling stresses.

Utility model DE 9010591 U1 discloses a modular rack with a guide that can support a variable number of slidable tool units for a coordinate measuring machine.

EP 0566719 discloses another modular probe magazine for a coordinate measuring machine. This magazine contains an arbitrary number of identical storage ports each connected to the adjacent ones.

A drawback of these known solutions is that, when the machine is reconfigured to execute a new measurement program, the rack must be reconfigured as well, to provide the required tools. The new configuration must be measured and recorded in the controller of the automatic machine, be it a coordinate measuring machine, a robot, a numerical controlled machining tool, or another kind of automatic machine. In coordinate measuring machines this operation is conventionally performed by equipping the machine with a touch probe and guiding manually the machine to feel stated reference points on the tool holders one after the other. The positioning of the tool rack in the operating volume of the machine must follow the rigorous specification of the manufacturer. Usually, the rack must be square with the principal axes of the machine and the rail carrying the tool station must be carefully levelled. Often, non-identical tool holders are desired in the tool rack and its number can vary depending on the number of required and/or desired tools. This adds another level of complexity to the configuration since the number of available holders and the exact nature of each holder must be recorded with the machine controller as well as his position.

All these necessary preparations represent costs, because they contribute to the unproductive time of the machine and must be carried out by skilled personnel. Moreover, as they involve several manual operations, they are prone to errors.

### Short disclosure of the invention

An aim of the present invention is the provision of an automatic system that overcomes the shortcomings and limitations of the state of the art.

According to the invention, these aims are attained by the object of the attached claims, by a method including the features of claim 1 and by the measuring system of claim 17.

Dependent claims introduce technical features and limitations that, while important and useful, are not essential to the functioning of the invention.

### Short description of the drawings

Exemplar embodiments of the invention are disclosed in the description and illustrated by the drawings in which:
- Figure 1 illustrates schematically a coordinate measuring system configured to carry out the inventive method.
- Figure 2 illustrates various elements of the coordinate system and of the method as functional blocks.

### Examples of embodiments of the present invention

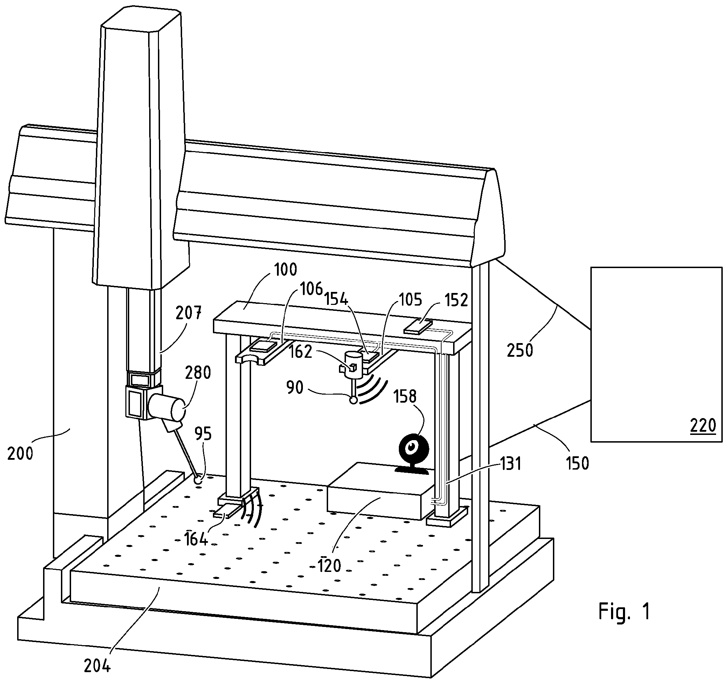

Figure 1 represents, in simplified fashion, a coordinate measuring machine 200 with a modular tool rack 100 mounted on the reference surface 204. The rack 100 is configurable and can accommodate a plurality of tool stations 105, each capable of holding a tool 90 for the coordinate machine.

The figure shows only two tool stations to simplify the drawing and improve its intelligibility: one tool station 105 with one tool 90 and an empty station 106. In a more realistic configuration, the rack 100 may comprise many more tool stations holding a plurality of tools, and possibly also spare empty stations for future use. The tool stations need not have a common size and shape either. The rack may have tool stations of different shapes, fashioned to hold each a special model or type of tool.

Advantageously, the modular tool rack 100 can accept a variable number of tool stations of different nature at different positions. In this manner it provides great flexibility to the operator for adequately configuring (and reconfiguring) the tools repository according to planed measurements. The tool rack can be configured to allow the tool stations to be mobility mounted on the tool rack, i.e. allowing a manual or automatic repositioning along one or more axes, e.g. by means of slides, screwing means and/or actuators.

Figure 1 shows a bridge-type CMM with a spindle 207 that can be moved automatically and with great accuracy along the three coordinate axes X, Y, Z and, mounted thereupon, an orientable wrist 280 that can hold a measuring tool and can be oriented by rotation about two-or possibly three-rotation axis, A, B. This arrangement is common and will be described exclusively in this disclosure to illustrate an example of the invention, but it is not the only possible. The invention applies equally well to articulated-arm coordinate machines as well as to industrial robots and machine tools, insofar as they are equipped with a modular tool rack and carry out the claimed method.

The movements of the tool 95 mounted on the business end of the CMM are determined and controlled by a CMM controller unit 220 that acts on the axis X, Y, Z, A, B of the CMM 200 to measure a workpiece in the accessible measure space according to a predetermined measurement plan. Very often, the measurement plan calls for different special tools to perform different operations; therefore, the measurement plan comprises tool change operations. The coordinate machine has an automatic connector that can connect and disconnect any of the available tools in the rack 100. A tool change operation in the measurement plan may involve the steps of approaching the rack, aligning the connector with an empty station 106, leave a tool in the empty station, move to a station holding a selected tool 90, loading the tool on the CMM.

According to an important aspect of the invention, the tool rack 100 is combined with a rack controller 120 that is in communication with the machine controller 220 and with a plurality of electronic devices providing operational parameters of the rack, of the tools loaded thereon, of the coordinate machine and of the environment. The communication between the rack controller 120 and the electronic devices-that may be called "sensors" in the following, with the same meaning-may be assured by (electrical and/or optical) cables 131, in the case of devices 152, 154 for example, or it may rely on any suitable form of wireless communication, for example as shown for sensors 164, 162.

The sensors communicating with the rack controller may be placed on the rack itself, such as sensor 152, on the tool stations, for example in the case of sensor 154, on the tools themselves as shown for device 162, or in any other position, as it is the case for camera 158 and sensor 164.

The nature of the sensors is not restricted. Environmental sensors may provide information on temperature, humidity, noise, ambient light, proximity of operators or other bodies, and so on. On the rack, some sensor may be occupation sensors, that provide an information about the presence of a tool on a determined station, vibration sensors, shock sensors, weight sensor, configured to weight a tool station and determine the mass of a tool mounted thereupon, size measurement devices, configured to determine the size of a tool on a tool station, and many other.

The rack of the invention may foresee any suitable mechanism to connect and position the tool stations 105, 106. Where the position of the stations is not indexed, the rack or the station may include special measuring devices that provide a relative position of a determined station relative to the tool rack.

The sensors mounted on the tool stations may also take various forms. In an important case, the tool stations may have devices configured to determine the dimensions or the mass of the tool, the presence of a tool, the model, or an individual identification number of the tool present on the station; however, any sensor could be mounted on the tool stations, when necessary.

In some cases, for example when the sensors are embedded in the tools themselves, a wireless communication is desirable. Such is the case of sensor 162, that could be for example a memory providing an individual unique part code that identifies a tool 90, or its model, or its internal temperature, or the status of an internal battery, or any other significant operational parameter.

Sensors may be positioned in any useful position. Sensor 164, for example, may be a light barrier arranged to provide a signal when the CMM head approaches the rack, or a vibration sensor, or a force sensor measuring the forces generated during a tool change operation, or any other sensor.

The electronic devices can be also actuators for actuating the rack, tool stations and/or probes when located in tool stations, notably in form of electrical motors. In some cases, these actuators can be electrical motor(s) located in a station tool for locking/unlocking probes from probe heads, e.g. by actuating locking mechanism of such probes. In other cases, these actuators can be electrical motor(s) configured to relatively move and/or orient one or a plurality of the tool stations with respect to the configurable tool rack.

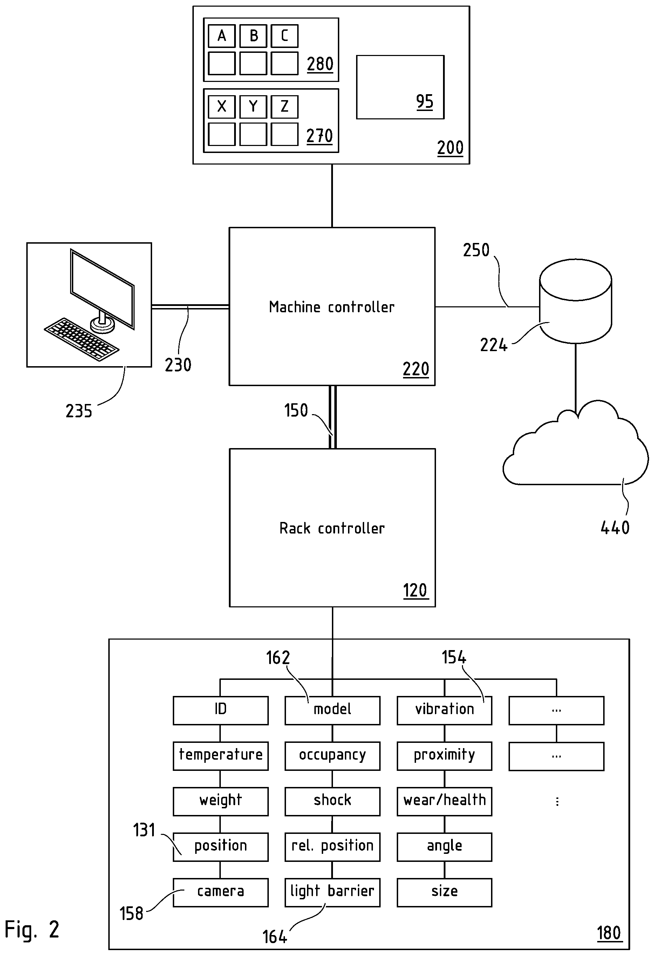

Figure 2 shows the component of the measurement system in a more schematic format. The machine controller 220 and the rack controller 120 are interconnected by a data link 150 that can transmit digital information. The two controllers 220 and 120 may be part of a digital data network, for example an IP network, in which case the link 150 may be a physical channel, wired or wireless, capable of supporting IP packets. In general, however, the controllers 12, 220 can be connected in any way.

The machine controller may be embodied by personal computer or industrial PC running a specialised control program. Among its task, it is configured to obtain a measurement plan for a determined workpiece, either by fetching it from its local storage 224, or from the internet 440, or by creating the plan from a nominal model of the workpiece and indication from an operator, or in any other way.

The measurement plan includes measure operations, in which the probe 95 operates on a workpiece and the controller 220 derives coordinates of points on the workpiece's surfaces as well as tool change operations, as described above.

The machine controller 220 has access to interactive input/output devices 235 for reproducing the measurement results and/or taking input and commands from a human operator. The interactive devices may be local devices such as a monitor/keyboard/mouse directly connected to the controller 220, or remote devices, related to a different computer communicating with the controller 220 over a network. The interactive devices may include also control lights, a control pendant or other.

The rack controller 120 communicates, through wires or wirelessly, or possibly through non-represented interface devices, with a group 180 of electronic devices configured to provide operational parameters of the rack, of the tools loaded therein, of the coordinate machine, or the environment, or other.

For what operational parameters of the entire rack are concerned, the group 180 of electronic devices may include:
- a collision detector,
- position and/or angle transducer providing a position, respectively an orientation of the rack relative to a suitable coordinate system, for example the coordinate system of the CMM,
- devices providing a health status or a wear indicator of the rack, for example a counter of the number of the load/unload operations related to the entire rack, or
- devices providing a status variable that can assume values like "operational", "faulty", "maintenance required" and so on.

Sensor attached to individual tool station may include:
- devices providing a health status or a wear indicator of the station, such as a counter of the number of load/unload operations of the individual tool station,
- devices providing a status variable that can assume values like "operational", "faulty", "maintenance required" and so on.
- position and/or angle transducer providing a position, respectively an orientation of the station relative to the tool rack,
- devices providing an evaluation of the position of the tool inside the station such as "empty", "properly loaded", "improperly loaded". This function may be ensured, among others, by proximity sensors based on inductive, capacitive or optical sensing, light barriers, microswitches, reed relays, Hall sensors, ...

The sensor may also provide operational parameters of individual tools. According to the cases, these sensors may be attached to the tool station, or placed at a distance-for example a camera capturing images of the tool that are processed with automatic recognition algorithms-or else embedded in the tool themselves. Significant operational parameters of the tools include:
- a type or model of the tool loaded in the station. This can be achieved by code reading, RFID tags, image recognition, coded contacts, and so on
- an individual unique part number of a tool loaded in the station, possibly based on the same technologies as the model identification device above,
- a health or wear status, for example a trigger counter, scanning distance, a wear information obtained by positively moving the tool in a checking device attached to or near the rack, for example for an optical control of the ruby touch ball,
- calibration status,
- weight and/or size of the tool, captured for example by strain gauges in the station or light barriers in the rack,
- a battery charge status where applicable.

Several environmental parameters may be acquired. These include:
- temperature
- humidity
- vibrations,
- etc.

The list above is not exhaustive.

The measurement system is used taking the operational parameters into account. For example, the measurement plan could be modified before its execution based on the operational parameters. Advantageously, the machine controller, or the rack controller could match the tools required by the plan with those available in the rack and modify the tool change operations in the plan such that the required tools are loaded at the prescribed times irrespective to their positions in the tool rack and/or the position of the tool rack in the CMM.

The system is preferably configured to detect mismatches between the required tools and the available ones and, in this case, refrain from executing the program and displaying a warning on the interactive devices 235, preferably suggesting corrective actions.

According to a variant, the machine controller or the rack controller may be configured to choose the available tools in such a way to spread the wear among several equivalent available tools, or avoid using tools that are too worn, or that have a weak battery, until they are properly maintained, respectively recharged.

Preferably, notably when the modular tool rack 100 has a plurality of tool stations with the same shape, the measuring system is configured also to optimise the position of the tools in the rack to minimize the program's execution time, for example by moving the most used tools to a tool station located nearer to the workpiece, while unused, uncalibrated and worn tools are moved in tool stations further away. When possible, the program is modified such that this reshuffling of the tool is executed automatically at start. However, when appropriate, the measuring system may choose a desired configuration of the tool rack automatically that optimizes the plan and present the desired configuration on the display 235 for an operator to build it. In this second semi-automatic variant, the system may also choose automatically some configuration that need a manual intervention, for example because they need a change of tool stations, or their rearrangement. Alternatively, or complementarily, the measuring system can instruct the configurable tool rack, via one or a plurality of electronic devices of the tool rack and/or of the tool stations, to automatically realize (at least part of) the desired configuration. The system can then verify, using the operational parameters, that the desired configuration has been realized.

Besides execution time, the optimisation of the measurement plan may take also other goals into account such as using less tools to reduce the calibration operations, using tools that are more precise (less worn, more recently calibrated or manufactured, at a suitable temperature) for critical measurements, prepare tools by pre-powering or pre-heating in view of a tool exchange.

The measuring system may also suggest and plan periodically automatic recalibration (e.g. sanity checks using special features on the rack) during hidden time of the measuring system and programmed plan. Alternatively or complementarily, the measuring system may also be configured to altering the tool change operations so as a periodically automatic recalibration could be executed during a (pre-planned) hidden time of the system and/or of the programmed plan.

The rack configuration may be optimised in view of reducing the rack deflection, thus improving the reliability of the loading and unloading operations. The rack may include a deflection detector to assist in reducing this source of error. In alternative, or in addition, if the deflection is acquired, it can be compensated by altering the trajectories of the tool exchange operations.

The optimisation may also have a goal of avoiding collisions. The sensor may also include proximity detector of various nature e. g. light barriers, cameras, LIDAR, and the system may be configured to raise an alert when the proximity detectors indicate that a collision is imminent or likely.

The measuring system may also use acquired operational parameters for supporting other functionalities and/or services, such as calibration of the rack and/or of the tool stations (e.g. using provided position and/or orientation of the rack relative to a suitable coordinate system and/or of the tool stations with respect to the rack).

Environmental parameters like temperature and humidity may be used to correct measurement data, to trigger predictive maintenance, and/or to plan regular maintenances.

### Reference symbols in the figures

- 90: tool or probe stored in the rack
- 95: tool or probe equipped on the business end of the CMM
- 100: rack
- 105: station
- 106: empty station
- 120: rack controller
- 131: communication links between the rack controller and the sensors
- 150: communication link between the machine controller and the rack controller
- 152: sensor or electronic device, for example occupation sensor
- 154: sensor or electronic device, for example vibration sensor
- 158: camera
- 162: wireless sensor or electronic device, for example model number
- 164: wireless sensor or electronic device, for example light barrier
- 180: electronic devices and sensors
- 200: CMM
- 204: reference surface
- 207: Z spindle
- 220: CMM controller
- 224: storage area
- 230: communication link to interactive console
- 235: interactive console
- 250: communication link between the machine controller and the CMM
- 270: motors and position transducers of axes XYZ of the CMM
- 280: motors and position transducers of axes ABC of the reorientable wrist
- 440: Internet, remote servers and resources

## Claims

1. A method of operating a measurement system comprising a coordinate measuring machine (200), a configurable tool rack (100) that can accept a plurality of stations (105,106), each station capable of holding a tool (95), the method comprising:
- obtaining a plan for measuring a workpiece with the coordinate measuring machine, the plan including tool change operations and measures on the workpiece with different tools available in the tool rack,
**characterised by**
- acquiring a set of operational parameters from one or a plurality of electronic devices installed on the tool rack and/or in the stations and/or in loaded tools,
- altering the tool change operations based on the operational parameters,
- executing the plan.

2. The method of the preceding claim, the operational parameters including a position and/or an orientation of the tool rack relative to the coordinate measuring machine.

3. The method of any one of the preceding claims, wherein the acquisition of the operational parameter is carried out by an electronic rack controller (120) and is followed by a transmission of the operational parameters to a machine controller (220) of the coordinate measuring machine that performs the alteration and the execution of the plan.

4. The method of any one of the preceding claims, the operational parameters including a health status or a wear status of the rack, or of stations, or of loaded tools.

5. The method of the preceding claim, the tool change operations being altered according to the health status or to the wear status of stations or tools such as to refrain to use unhealthy stations or tools or to distribute a wear among stations or tools.

6. The method of any one of the preceding claims, the operational parameters including a type identifier of a station or of a tool, or a unique identifier of a station or of a tool, or a position of a station relative to the tool rack.

7. The method of any one of the preceding claims, the operational parameters including a weight and/or a size of a loaded tool.

8. The method of any one of the preceding claims, the electronic devices including one or more of: video cameras, strain gauges, light barriers, RFID readers, position encoders, angle encoders, accelerometers, vibration sensors, electrical actuators or motors.

9. The method of any one of the preceding claims, the plan being altered during the performance in response to a change in the operational parameters.

10. The method of any one of the preceding claims, comprising
- choosing a desired configuration of the rack automatically based on the plan,
- making the desired configuration available to an operator through an output peripheral and/or instructing the configurable tool rack to actuate said desired configuration,
- verifying, using the operational parameters, that the operator and/or the configurable tool rack has realised the desired configuration.

11. The method of the preceding claim, wherein the choice of the desired configuration comprises an optimisation step aiming at reducing a bending of the tool rack and/or an execution time of the plan and/or wear of hardware components.

12. The method of claim 10 or claim 11, wherein the configurable tool rack is configured to accept a variable number of stations and/or a plurality of different models of stations; the desired configuration comprising : a desired number of stations, a desired model of at least one of said station, and/or a desired relative position and/or orientation of at least one of said stations with respect to the tool rack and/or of coordinate measuring machine and/or the workpiece.

13. The method of any one of the preceding claims comprising triggering a maintenance operation based on the operational parameters.

14. The method of any one of the preceding claims, comprising a correction of results of the measures, based on information about vibration, temperature, or humidity comprised in the operational parameters.

15. The method of any one of the preceding claims, comprising interrupting the plan and triggering a predetermined crash response upon reception of a crash signal comprised in the operational parameters.

16. The method of any one of the preceding claims, including modifying the plan before its execution based on the operational parameters, and/or prompting a warning or a corrective action in case of a detection of a mismatch between the operational parameters and a required operational parameter for executing the plan.

17. A measuring system comprising a coordinate measuring machine with an electronic machine controller and a configurable tool rack that can accept a plurality of stations, each station capable of loading a tool for the coordinate measuring machine, comprising an electronic rack controller in communication with the machine controller configured to read operational parameters from a plurality of electronic devices installed on the tool rack and/or in the stations and/or in loaded tools, the machine controller and the rack controller being programmed to carry out the method of any one of the preceding claims.
